# EUROPEAN PATENT SPECIFICATION

(11) **EP 2 040 218 B1**
(45) Date of publication and mention of the grant of the patent: **23.08.2017**
(21) Application number: 07766974.5
(22) Date of filing: 09.07.2007
(51) Int. Cl.: G06T 1/00, H04N 1/46, H04N 1/60

(54) **IMAGE PROCESSING DEVICE AND IMAGE PROCESSING PROGRAM**
BILDVERARBEITUNGSVORRICHTUNG UND BILDVERARBEITUNGSPROGRAMM
DISPOSITIF DE TRAITEMENT D'IMAGES ET PROGRAMME DE TRAITEMENT D'IMAGES

(30) Priority: 10.07.2006 JP 2006189607
(43) Date of publication of application: 25.03.2009
(73) Proprietor: Nikon Corporation, Tokyo 108-6290 (JP)
(72) Inventor: SHINODA, Tomotaka, Tokyo 100-8331 (JP); MITAKA, Toshihiro, Sapporo-shi Hokkaido 060-8556 (JP); MORI, Satoshi, Sapporo-shi Hokkaido 060-8556 (JP); WATANABE, Naoki, Sapporo-shi Hokkaido 060-8556 (JP); ITO, Hideki, Sapporo-shi Hokkaido 060-8556 (JP)
(74) Representative: Zeitler Volpert Kandlbinder Patent- und Rechtsanwälte Partnerschaft mbB
(86) International application number: PCT/JP2007/000742
(87) International publication number: WO 2008/007461

(56) References cited:
- JP-A- 01 012 381
- JP-A- 03 127 284
- JP-A- 04 248 681
- JP-A- 05 174 142
- JP-A- 10 302 069
- JP-A- 2002 271 808
- US-A- 5 719 639
- US-A- 5 930 009
- US-A1- 2003 007 687
- YUH-HWAN LIU AND YUAN-YOW CHIOU: "THE COLOR NORMALIZATION BASED ON THE HUE HISTOGRAM WARPING FOR THE SEGMENTATION OF RENAL BIOPSY" CHIA-NAN ANNUAL BULLETIN, vol. 30, 2004, pages 33-41, XP002598601
- MACKIE I. ET AL.: "A simple solution to a blinding problem" THE JOURNAL OF HISTOCHEMISTRY AND CYTOCHEMISTRY, vol. 50, no. 8, 2002, pages 1139-1139, XP002598602 & LANDINIG AND PERRYER G: "Digital enhancement of haematoxylin and eosin stained histological images for red green colour blind observers" JOURNAL OF MICROSCOPY, vol. 234, no. 3, 2009, pages 293-301,
- QUEISSER A ED - INSTITUTE OF ELECTRICAL AND ELECTRONICS ENGINEERS: "COLOR SPACES FOR INSPECTION OF NATURAL OBJECTS" PROCEEDINGS OF THE INTERNATIONAL CONFERENCE ON IMAGE PROCESSING. ICIP 1997. SANTA BARBARA, CA, OCT. 26 - 29, 1997; [PROCEEDINGS OF THE INTERNATIONAL CONFERENCE ON IMAGE PROCESSING], LOS ALAMITOS, CA : IEEE, US, 26 October 1997 (1997-10-26), pages 42-45, XP000780844 ISBN: 978-0-8186-8184-4
- GILLESPIE A.R., KLAHLE A.B. AND WALKER R.E.: "color enhancement of highly correlated images. I. Decorrelation and HSI contrast stretches" REMOTE SENSING OF ENVIRONMENT, vol. 20, 1986, pages 209-235, XP002598603
- PAVLOVA P.E., CYRRILOV K.P. AND MOUMDJIEV I.N.: "Application of HSV colour system in identification by colour of biological objects on the basis of microscopic images" COMPUTERIZED MEDICAL IMAGING AND GRAPHICS, vol. 20, no. 5, 1996, pages 357-364, XP002598604
- bishop c.m.: "neural networks for pattern recognition" 1995, oxford , XP002598605 , pages 23-26

## Description

### TECHNICAL FIELD

The present invention relates to an image processing device and an image processing program that process a color image.

### BACKGROUND ART

In order to accurately diagnose various diseases of animals including humans, diagnoses of pathological tissues and cells are indispensable. Among others, information about kinds, numbers and shapes of cells included in blood and bone marrow is indispensable in many diagnoses of diseases, and therefore, cells are collected from blood and bone marrow and specimens are obtained and then a technical expert observes differences in shapes and color tones of the cells using a microscope and judges the kinds and anomalies of individual cells. Such tasks (in which a technical expert directly looks into a microscope and makes a judgment manually based on his/her own experience) are carried out routinely in an inspection room of hospitals all over the world.

For example, the measurement of the number of eosinophils in blood gives critical information for diagnoses of allergic diseases. The number of eosinophils has increased in blood of patients of pollinosis and asthma. For the diagnoses, blood is collected from a patient and the blood is smeared and fixed onto a slide glass, and then a technical expert observes the Giemsa-stained specimen by using a microscope with a magnification of 1,000 (liquid immersion). Then, the technical expert diagnoses based on the existence of eosinophilics (reference: "(Kensa To Gijutsu (Inspection and Technique)", extra number, vol. 28, No. 7, 2000, IGAKU-SHOIN Ltd., "Standard Kensa ketsueki-Gaku (Standard Laboratory Hematology)", compiled by The Japanese Society for Laboratory Hematology, Ishiyaku Publishers, Inc., 2003, 1 st edition).

On the other hand, thanks to the recent development of digital technologies, each element of a microscopic image is converted into digital information and it is made possible not only to directly project an image on a screen but also to process the image in a variety of ways using software. If the task of judgment based on the experience of a technical expert is generalized into a method by which any one can make a distinction, it is made possible to considerably reduce the time and costs for the task.

In such circumstances, a color image of a stained specimen is taken in and pathological diagnoses of the specimen are made based on the image. It is normal to identify the kinds of individual cells based on the differences in forms of specimen images that appear in the image (for example, refer to non-patent document 1). Instead of the diagnosis based on the differences in forms of specimen images, it is also proposed to identify the kinds of individual cells by plotting the values of each pixel of a color image of specimen in a predetermined color space and distinguishing the color differences for each kind of cell based on the sub-volume occupied by the values of each pixel in the color space (for example, refer to patent document 1).
Non-patent document 1: Clim. Lab. Heam 2003, 25, 139-147, "Differential counting of blood leukocytes using automated microscopy and a decision support system based on artificial neural networks - evaluation of DiffMaster Octavia"
Non-patent document 2: YUH-HWAN LIU AND YUAN-YOW CHIOU: "THE COLOR NORMALIZATION BASED ON THE HUE HISTOGRAM WARPING FOR THE SEGMENTATION OF RENAL BIOPSY"CHIA-NAN ANNUAL BULLETIN, vol. 30, pages 33-41.
Patent document 1: Japanese Unexamined Patent Application Publication No. 2003-506796

### DISCLOSURE OF THE INVENTION

### PROBLEMS TO BE SOLVED BY THE INVENTION

The method, in which color difference for each kind of cells is distinguished based on the sub-volume in the color space, is however an indirect method. Recently, it is desired to directly distinguish the color difference for each kind of cells in a color image (real image) of specimen and make a diagnosis based on the color difference. However, the color difference for each kind of cells in a real image is extremely small and it is not possible to explicitly distinguish the color difference on the real image.

A proposition of the present invention is to provide an image processing device and an image processing program capable of clarifying a slight color difference in a color image (real image) of specimen.

### MEANS FOR SOLVING THE PROBLEMS

An image processing device as claimed includes a processing unit that finds a hue of each pixel of a color image, a detecting unit that detects a mode value of the hue, and a changing unit that changes the hue of each pixel of the color image in accordance with the difference between a boundary value of two predefined hues and the mode value.

In a second invention, the processing unit finds saturation and intensity of each pixel, in addition to the hue, and the changing unit also changes the saturation and the intensity, in addition to the change of the hue and changes the saturation and the intensity of each pixel of the color image so that a plurality of target pixels different in the saturation becomes most distant from one another in a color space including a hue axis, a saturation axis and an intensity axis, in the first invention.

A third invention further includes a converting unit which finds each color component of red, green and blue of each pixel of the color image based on the hue, the saturation and the intensity after the change by the changing unit and converts a gradation of the each color component so that the plurality of target pixels becomes most distant from one another in the color space, in the second invention.

In a fourth invention, the processing unit finds saturation and intensity of each pixel, in addition to the hue, and the device further includes a converting unit which finds each color component of red, green and blue of each pixel in the color image based on the hue after the change by the changing unit and the saturation and the intensity found by the processing unit and converts a gradation of the each color component so that a plurality of target pixels different in the saturation becomes most distant from one another in a color space including a hue axis, a saturation axis and an intensity axis, in the first invention.

In a fifth invention, the converting unit converts the gradation of each color component using a table, in the third or fourth invention.

A sixth invention includes an extracting unit that extracts the plurality of the target pixels based on a user instruction, in any of the second to fifth inventions.

In a seventh invention, the processing unit finds at least the hue of each pixel using the color image after having been subjected to negative-positive reversal, in any of the first to sixth inventions.

An eighth invention includes a selecting unit that selects a target area of a predefined hue value of the color image, in any of the first to seventh inventions.

In a ninth invention, the selecting unit selects the target area based on a user instruction, in the eighth invention.

A tenth invention includes a measuring unit that measures the number or area ratio of the target areas in the color image, in the eighth or ninth invention.

In an eleventh invention, the color image is a photographed image of eosinophil, in any of the first to tenth inventions.

An image processing program product according to a twelfth invention causes a computer to execute a processing operation of finding a hue of each pixel of a color image, a detecting operation of detecting a mode value of the hue, and a changing operation of changing the hue of each pixel of the color image in accordance with a difference between a boundary value of two predefined hues and the mode value.

According to the image processing device and the image processing program product of the present invention, it is possible to clarify a slight color difference in a color image (real image) of specimen.

### BRIEF DESCRIPTION OF THE DRAWINGS

Fig. 1(a) is a block diagram for illustrating a configuration of an inspection apparatus 10 and Fig. 1(b) is a diagram showing an example of a specimen 10A.
Fig. 2 is a flowchart showing a processing operation of a color image in an image processing device 12 in the present embodiment.
Fig. 3 is a diagram showing an example of a data path when processing a color image.
Fig. 4 is a schematic diagram of a color image after having been subjected to negative-positive reversal.
Fig. 5 is an explanatory diagram in which the values (hue/saturation/intensity) of each pixel after having been subjected to HSI conversion are plotted in a predetermined color space.
Fig. 6 is a diagram for illustrating a mode value (hue H₃₀) of the hue of each pixel.
Fig. 7 is a diagram for illustrating rotation of the hue H₃₀.
Fig. 8 is a schematic diagram of a color image after its hue has been changed.
Fig. 9 is a diagram for illustrating extraction of target pixels 31 to 34.
Fig. 10 is a diagram for illustrating a color space of a twin six-sided pyramid model.
Fig. 11 is a diagram for illustrating plot positions of the target pixels 31 to 34 after their saturation/intensity have been changed.
Fig. 12 is a diagram for illustrating an example of a gradation conversion curve (γ₁ to γ₃).
Fig. 13 is a diagram for illustrating the plot positions of the target pixels 31 to 34 when a sample distance has become maximum by the gradation conversion.
Fig. 14(a) is a diagram showing a color image after having been subjected to the negative-positive reversal of a specimen of bone marrow including Giemsa-stained eosinophils and Fig. 14(b) is a diagram showing a color image after having been subjected to the processing in Fig. 2.

### BEST MODE FOR CARRYING OUT THE INVENTION

### <Description of first embodiment>

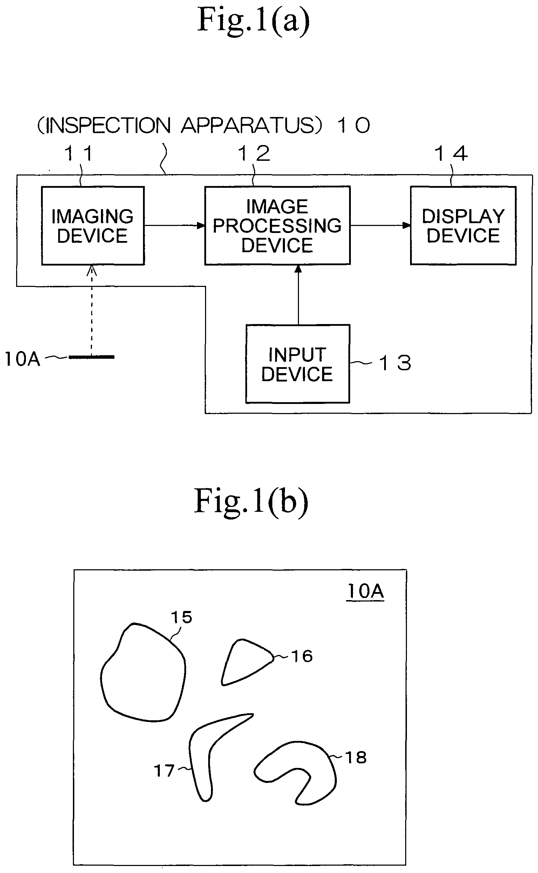

Fig. 1(a) is a block diagram showing a configuration of an inspection apparatus 10 in a first embodiment and Fig. 1(b) is an explanatory diagram showing, for example, a specimen of Giemsa-stained blood. The inspection apparatus 10 is used for pathological diagnosis of a specimen 10A. The specimen 10A is, for example, a specimen of Giemsa-stained blood, including a plurality of cells 15 to 18.

The inspection apparatus 10 is provided with an imaging device 11, such as a digital camera, an image processing device 12, an input device 13, and a display device 14. In the inspection apparatus 10, the imaging device 11 photographs the specimen 10A and outputs a color image (RGB image) of the specimen 10A to the image processing device 12.

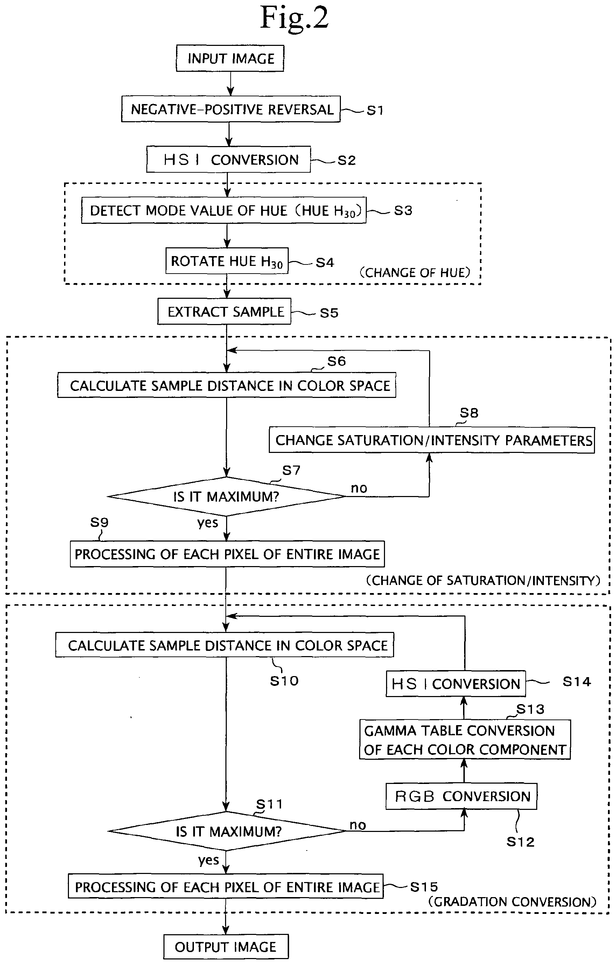

The image processing device 12 takes in the color image of the specimen 10A and processes the color image in accordance with the procedure of the flowchart shown in Fig. 2. In processing, a user instruction from the input device 13 is referred to as the need arises. In addition, the color image during or after processing is output to the display device 14 as the need arises.

The image processing device 12 is a computer in which an image processing program (Fig. 2) is installed. To install the image processing program, it is recommended to use a recording medium (CD-ROM etc.) in which the image processing program is recorded. Alternatively, it may also be possible to use carrier waves (including the image processing program) that can be downloaded via the Internet.

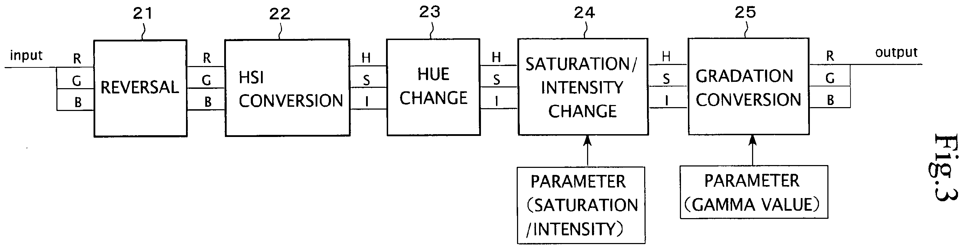

Next, the specific content of the processing (Fig. 2) in the image processing device 12 of the present embodiment will be described. The object of the processing is the color image (RGB image) of the specimen 10A. An example of the data path when processing the color image is shown in Fig. 3 (blocks 21 to 25).

After taking in the color image of the specimen 10A, the image processing device 12 subjects it to negative-positive reversal (step S1, block 21). In the color image before the reversal, the purple cells 15 to 18 are distributed in the white background and in the color image after the reversal, the green cells 15 to 18 are distributed in the black background. Because each image is a real image, the color difference for each kind of cell is extremely slight.

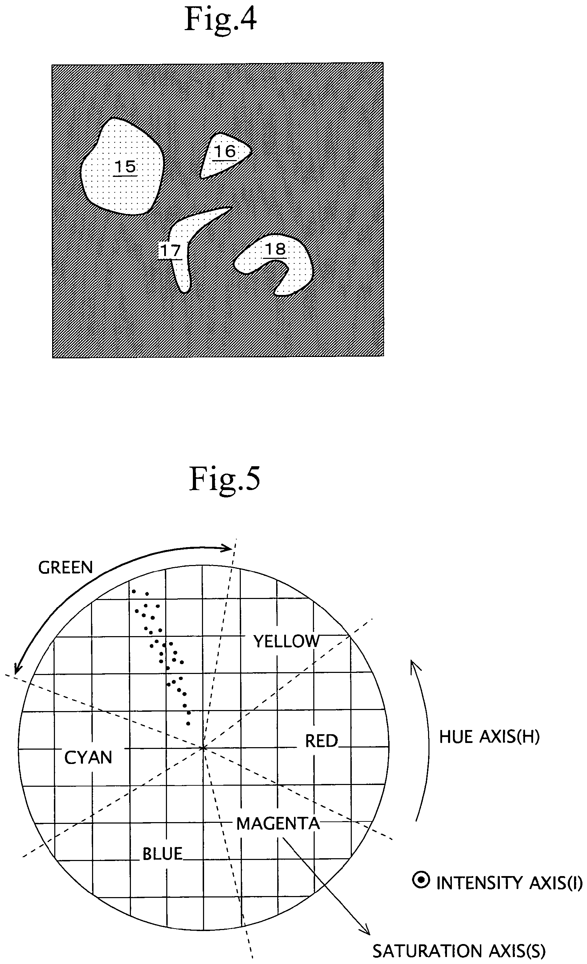

Because of this, it is difficult to explicitly distinguish the color difference for each kind of cell on the real image. The schematic diagram of the color image after the negative-positive reversal is shown in Fig. 4. In Fig. 4, to show that the color difference of each kind of cell is extremely slight, the cells 15 to 18 are hatched in the same way. The image processing device 12 in the present embodiment carries out the following processing to clarify the slight color difference in the real image.

In step S2 (block 22), the color image after the negative-positive reversal is subjected to HSI conversion. That is, the hue (H), the saturation (S), and the intensity (I) of each pixel are found based on each color component of red, green and blue (RGB) of each pixel of the color image.

The values (hue/saturation/intensity) of each pixel after the HSI conversion are plotted in a predetermined color space as, for example, "·" in Fig. 5. In the color space in Fig. 5, the circumferential direction in the plane of the paper denotes the hue axis (H), the radial direction denotes the saturation axis (S), and the direction perpendicular to the plane of the paper denotes the intensity axis (I). It can be seen that the plot positions of the values (hue/saturation/intensity) of each pixel are distributed near the center in the direction of the hue axis (H) in the green area.

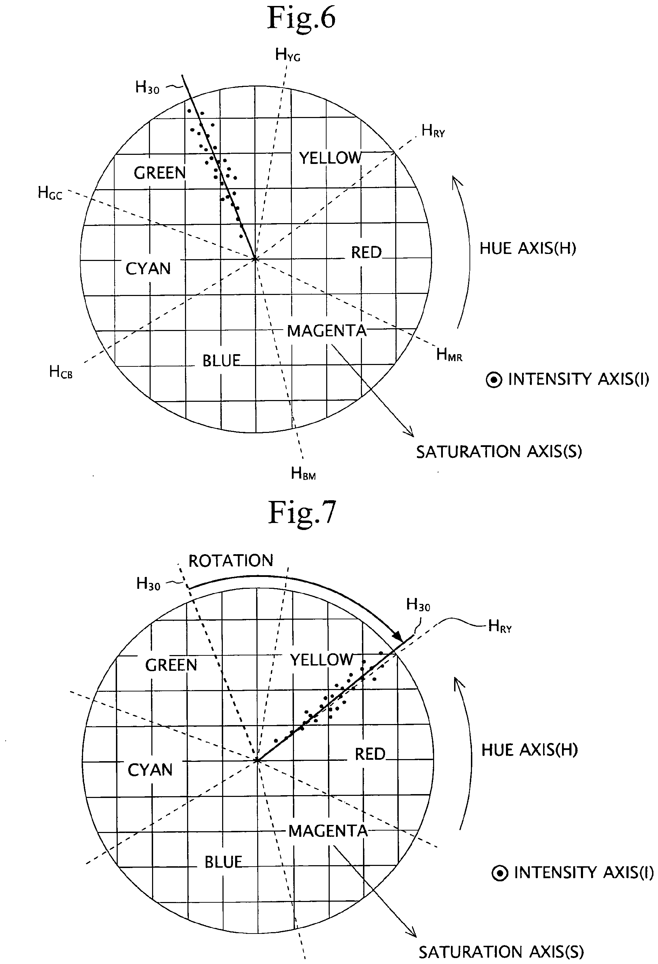

In the next steps S3, S4 (block 23), the hue of each pixel is changed. That is, after the mode value of the hue of each pixel (hue H₃₀ in Fig. 6) is detected, the hue H₃₀ is rotated (Fig. 7) so that the hue H₃₀ overlaps one of color boundaries (for example, any one of color boundaries H_{RY}, H_{YG}, H_{GC}, H_{CB}, H_{BM} and H_{MR}) and thus the hue of each pixel of the entire image is changed. A color boundary is a boundary value between two predefined hues.

In Fig. 7, an example is shown, in which the hue of each pixel is changed by rotating the hue H₃₀ so that it overlaps the boundary value between the red area and the yellow area (that is, the color boundary H_{RY}). In this case, the hue of each pixel is changed in accordance with the difference between the hue H₃₀ and the color boundary H_{RY} (the angular difference in the direction of the hue axis (H)).

By changing the hue as described above, the plot positions of the values (hue/saturation/intensity) of each pixel in the color space are distributed near the boundary value between red and yellow (color boundary H_{RY}). Because of this, it is possible to produce a color image (real image) in which the color difference of each kind of cell is clear by finding each color component of red, green, and blue (RGB) of each pixel based on the values (hue/saturation/intensity) of each pixel after the hue has been changed.

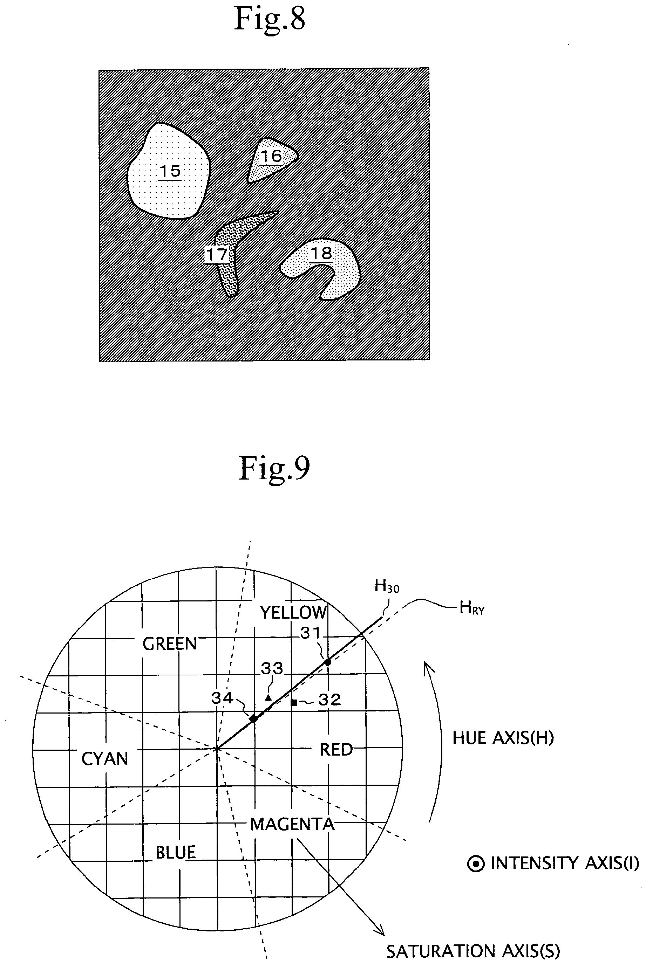

The schematic diagram of the color image after the hue has been changed is illustrated in Fig. 8. In Fig. 8, the cells 15 to 1 8 are differently hatched in order to explicitly indicate that the color difference for each kind of cell has been clarified.

The image processing device 12 in the present embodiment carries out the processing in steps S6 to S9 (block 24) and the processing in steps S10 to S15 (block 25) following the processing in step S5 in order to further clarify the color difference in the color image (real image).

First, in step S5, among the values (hue/saturation/intensity) of each pixel plotted in the color space (Fig. 7), the value of the hue H₃₀ or the value in the vicinity thereof is shown on the hue axis (H) and a plurality of target pixels 31 to 34 (refer to Fig. 9) indicative of different values from one another are extracted as samples on the saturation axis (S).

The samples (the plurality of the target pixels 31 to 34 of different saturations) may be extracted based on a user instruction through the input device 13 (Fig. 1), or may be extracted automatically within the image processing device 12. When the samples are extracted based on a user instruction through the input device 13, it is preferable to display the image in the color space (Fig. 7) on the display device 14.

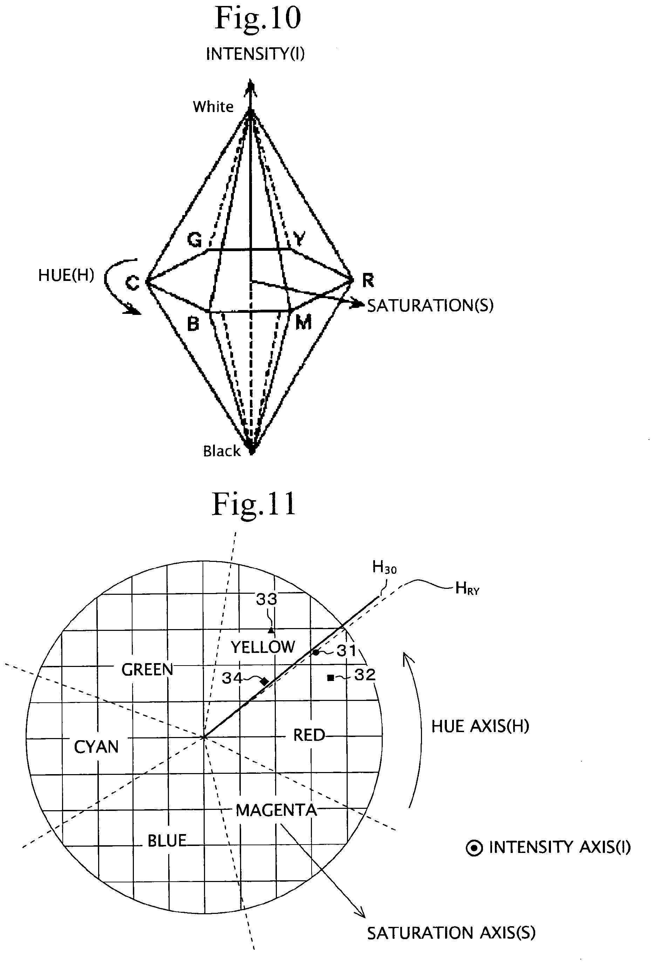

In the next steps S6 to S9 (block 24), the saturation/intensity of each pixel are changed so that the target pixels 31 to 34 become most distant from one another in the three-dimensional color space (for example, the color space of a twin six-sided pyramid model shown in Fig. 10) using the values (hue/saturation/intensity) of the target pixels 31 to 34 extracted in step S5.

Specifically, distances (sample distances) between the plurality of the target pixels 31 to 34 in the color space (Fig. 10) are calculated and the same calculation is repeated while maintaining the parameter of the hue of each pixel constant and changing the parameters of the saturation/intensity. Then, when the parameters of the saturation/intensity with which the sample distance is maximum are found, the saturation and the intensity of each pixel of the entire image are changed using the parameters and the processing in steps S6 to S9 (block 24) is ended.

The plot positions of the target pixels 31 to 34 at this point of time are shown in Fig 11. As can be seen from the comparison with the plot positions (Fig. 9) before the saturation/intensity are changed, the plot positions after the change (Fig. 11) are distributed in a comparatively wide range on both sides with the boundary value (color boundary H_{RY}) between red and yellow sandwiched in between. The plot positions of other pixels, which are not shown, are distributed in a similar range.

Since the larger the distance in the color space, the larger the color difference in the real image, it is possible to produce a color image (real image) in which the color difference for each kind of cell is more clarified than the color image after the hue is changed (Fig. 8) by finding each color component of red, green and blue (RGB) of each pixel based on the values (hue/saturation/intensity) of each pixel after the saturation/intensity are changed.

In the next steps S10 to S15 (block 25), the processing in steps S12 to S14 is carried out in the middle of the repetition of the sample distance calculation similar to that in the above steps S6 to S9 (block 24).

In step S12, RGB conversion is carried out as pre-processing of step S13. That is, each color component of red, green and blue (RGB) of the respective target pixels 31 to 34 is found based on the values of the target pixels 31 to 34 after the hue/saturation/intensity are changed.

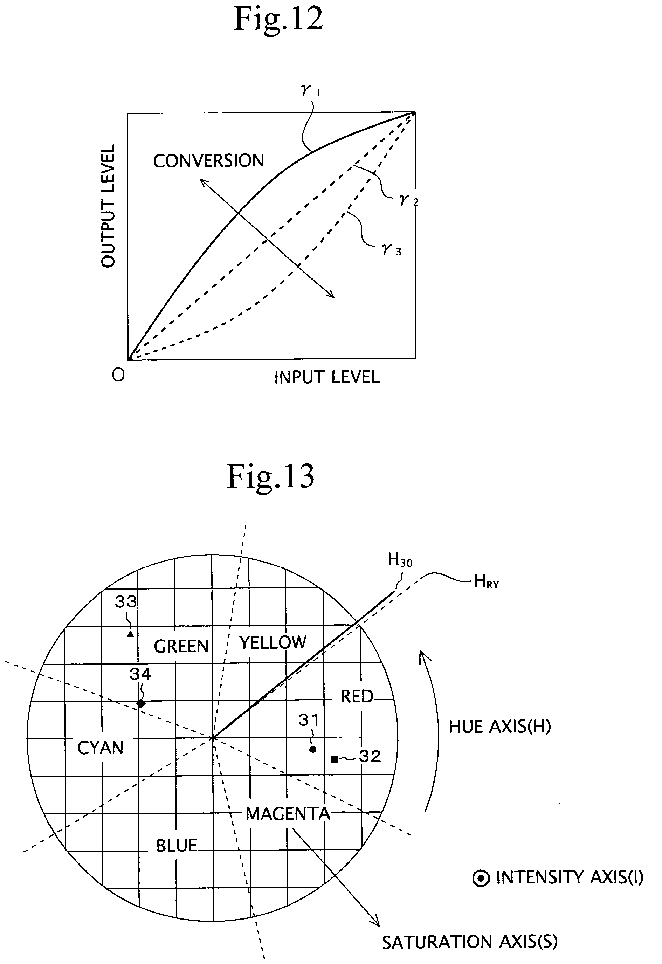

In step S13, gamma table conversion is carried out for each color component of red, green and blue (RGB) of the respective target pixels 31 to 34. That is, the data of the gradation conversion table corresponding to the gradation conversion curve (for example, any of the curves γ₁ to γ₃ in Fig. 12) of a predefined gamma value is read and the gradation of each color component of red, green and blue (RGB) is converted using the table. It is preferable to use a different table for each color component at this time.

In step S14, HSI conversion is carried out as post-processing of step S13. That is, the hue/saturation/intensity of the respective target pixels 31 to 34 are found based on each color component of red, green and blue (RGB) of the target pixels 31 to 34 after the gradation conversion. The hue/saturation/intensity of the respective target pixels 31 to 34 are used for the calculation of the sample distance in step S10.

Such processing in steps S12 to S14 is carried out repeatedly while changing the gamma value of the gradation conversion curve (Fig. 12) so that the target pixels 31 to 34 become most distant from one another in the color space (for example, Fig. 10). Then, when the gamma value with which the sample distance is maximum is found, the operation proceeds to the processing in the next step S15.

In step S15, the RGB conversion of the entire image is carried out first and then each color component of red, green and blue (RGB) of each pixel of the entire image is found. Then, the gamma table conversion is carried out for each color component of red, green and blue (RGB) of each pixel of the entire image. That is, the gradation of each color component of red, green and blue (RGB) is converted using the gradation conversion table of a gamma value with which the above sample distance is maximum. With this operation, the processing in steps S10 to S15 (block 25) is ended.

After the processing in step S15 is ended, the image processing device 12 in the present embodiment produces a color image (real image) of the specimen 10A based on each color component of red, green and blue (RGB) after the gradation conversion and outputs it, for example, to the display device 14 (Fig. 1) as a final result.

Here, the plot positions of the target pixels 31 to 34 when the sample distance is maximum in the processing in the above steps S10 to S15 (block 25) are shown in Fig. 13. As can be seen from the comparison with the previous plot positions (Fig. 9, Fig. 11), the plot positions in Fig. 13 are distributed in a very wide range on both sides with the boundary value (color boundary H_{RY}) between red and yellow sandwiched in between. The plot positions of other pixels, which are not shown, are also distributed in a similar range.

As already described, because the larger the distance in the color space, the larger the color difference in the real image, it is possible to obtain a color image (real image) in which the color difference for each kind of cell is more clarified than the color image after the hue is changed (Fig. 8) or the color image after the saturation/intensity are changed by producing a color image (real image) in step S15 based on the values (hue/saturation/intensity) of each pixel at the plot positions such as those in Fig. 13.

The image processing device 12 in the present embodiment takes in the color image of the specimen 10A and rotates the hue H₃₀ (Fig. 7) so that the mode value of the hue of each pixel (the hue H₃₀ in Fig. 6) overlaps one color boundary (for example, the color boundary H_{RY}) in the color space after subjecting it to negative-position reversal (Fig. 4) and changes the hue of each pixel of the entire image, and therefore, it is possible to clarify the slight color difference in the color image (real image) of the specimen 10A.

Consequently, the blood cells having substantially the same color when input are classified into each kind according to color and it is made possible to directly distinguish the color difference for each kind of cell in the color image (real image) of the specimen 10A and to diagnose the specimen 10A by color difference (to specify the individual kinds of cells).

In the diagnosis by the color difference, the standards for judgment are easy-to-see compared to the diagnosis by the difference in cell shapes. Because of this, it is possible for a person having no special knowledge about the cell shapes to make a diagnosis with ease. Further, the time required for the diagnosis can be shortened compared to the diagnosis by difference in cell shapes, and the variations in results due to the difference in skill and experience of a person who makes a diagnosis can also be reduced. In addition, it is easy to apply it to an automatic judgment using a computer.

Further, the diagnosis by the difference in cell shapes requires a magnification of about, for example, 1,000 (eyepiece 10 × objective 100) of the image of specimen, and therefore, it is necessary to establish a liquid immersion state between the objective lens (not shown) and the specimen 10A and the labor and time used to be required to take in the color image of the specimen 10A. However, in the present embodiment, the diagnosis is made by the color difference, and therefore, detailed information about the cell shapes is not necessary. As a result, the magnification of the specimen image can be reduced (for example, about ×400) and the liquid immersion state between the objective lens and the specimen 10A is no longer necessary. Because of this, it is possible to take in the color image of the specimen 10A both easily and quickly.

The image processing device 12 in the present embodiment also changes the saturation and the intensity of each pixel of the entire image so that the sample distance between the target pixels 31 to 34 in the color space (Fig. 10) is maximum (Fig. 9 to Fig. 11), in addition to the change of the hue of each pixel of the entire image. Consequently, it is possible to further clarify the slight color difference in the color image (real image) of the specimen 10A.

Further, the image processing device 12 in the present embodiment converts the gradation of each color component of red, green and blue (RGB) of the entire image so that the sample distance between the target pixels 31 to 34 in the color space (Fig. 10) is maximum (Fig. 11 to Fig. 13), in addition to the change of the hue/saturation/intensity of each pixel of the above-mentioned entire image. Consequently, it is possible to further clarify the slight color difference in the color image (real image) of the specimen 10A.

The image processing device 12 in the present embodiment uses the gradation conversion table corresponding to the gradation conversion curve (for example, any of the curves γ₁ to γ₃ in Fig. 12) when converting the gradation of each color component of red, green and blue (RGB) of each pixel, and therefore, the processing of the gradation conversion can be carried out quickly. However, the gradation conversion may be carried out by the operation processing without using the table.

Further, the image processing device 12 in the present embodiment carries out the processing, such as changing of the hue, using the color image after negative-positive reversal (Fig. 4), and therefore, it is possible to obtain a visual field of familiar colors similar to the period of time of dark field observation of the specimen 10A. However, the processing, such as the similar changing of the hue, may be carried out using the color image before negative-positive reversal.

### <Description of second embodiment>

In a second embodiment, an example will be described, in which the specimen 10A is a bone marrow specimen including Giemsa-stained eosinophils. A color image (real image) output from the imaging device 11 to the image processing device 12 is a photographed image of eosinophils. Then, the same processing (Fig. 2) as in the first embodiment is carried out for the color image.

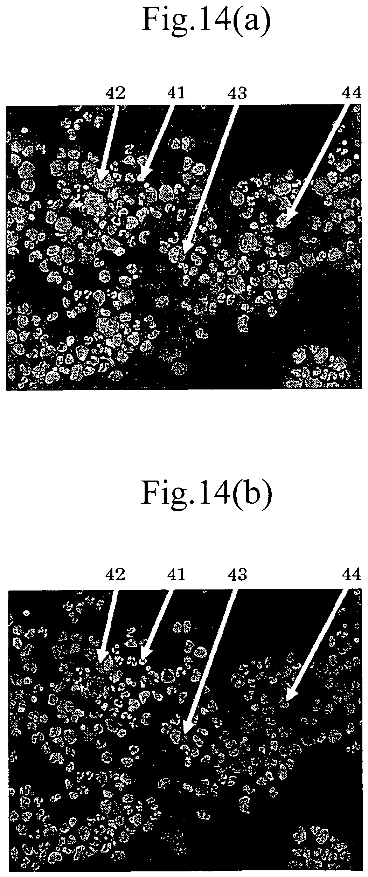

In the color image after negative-positive reversal (Fig. 14(a)), the background is black and many green cells are distributed therein. The many cells include eosinophils, however, they are the same green as that of other cells and the color difference between the kinds of cell is extremely slight. Because of this, it is difficult to explicitly distinguish the color difference for each kind of cell in the color image (Fig. 14(a)).

On the other hand, in the color image (Fig. 14(b)) after having been subjected to the processing in Fig. 2, cells of various colors are distributed in the black background, as a result. For example, a cell 41 assumes pink, cells 42, 43 assume green, and a cell 44 assumes red. Among these, it is known that the cells 42, 43 that remain unchanged, that is, green, correspond to eosinophils and the cells 41 44 that have changed from green to other colors correspond to leukocytes. Because of this, in the color image after the processing (Fig. 14(b)), it is possible to identify that the part the cytoplasm of which is green is eosinophils.

According to the second embodiment, when a bone marrow specimen including Giemsa-stained eosinophils is an object of the pathological diagnosis, it is possible to directly distinguish eosinophils from other leukocytes by the color difference in the color image (Fig. 14(b)) having been subjected to the processing in Fig. 2. Because of this it is possible to make a diagnosis based on the easy-to-see standards of judgment, that is, the color difference for each kind of cell.

At the time of diagnosis, it is preferable to select a target area with a predefined color value (for example, a green area corresponding to eosinophils) in the color image (Fig. 14(b)) after having been subjected to the processing in Fig. 2 to use it for the pathological judgment. The color value includes a value of each color component of red, green and blue (RGB) or values of hue/saturation/intensity of each pixel. By selecting a target area with the same color value, the pathological judgment is made easier.

The selection of a target area may also be carried out automatically within the image processing device 12 or based on a user instruction from the input device 13 (Fig. 1). The selection based on the user instruction may be carried out based on, for example, a color value at a portion on the screen of the display device 14 at which a user clicks. It is preferable to display the selected target area so that is can be distinguished from other parts.

Further, at the time of diagnosis, it is preferable to measure the number or area ratio of target areas in the color image (Fig. 14(b)) after having been subjected to the processing in Fig. 2. When counting the number of target areas, it is preferable to detect a closed area with a predetermined color value as individual target areas by detecting already known edges (detection of contours) as its pre-processing.

The number of target areas is the number of those in the entire color image (Fig. 14(b)) or the number of those in a partial area. The area ratio of the target areas is the ratio of the number of pixels in the target area to the number of pixels of the entire color image (Fig. 14(b)), or the ratio of the number of pixels in the target areas to the number of pixels in the cell area in the image, and so on. By making such measurements, the pathological judgment is made easier.

### <Description of other embodiments>

In the above-described embodiments, the change of the saturation/intensity (S6 to S9) and the gradation conversion (S10 to S15) are carried out after the change of the hue (S3, S4), however, the present invention is not limited to those. Either of the change of the saturation/intensity (S6 to S9) and the gradation conversion (S10 to S15) may be omitted. When the gradation conversion (S10 to S15) is omitted, it is required to carry out the processing of RGB conversion after step S9. When both of the change of the saturation/intensity (S6 to S9) and the gradation conversion (S10 to S15) are omitted, the processing in step S5 is no longer necessary and it is required to carry out the processing of RGB conversion after the processing in step S4. When the change of the saturation/intensity (S6 to S9) is omitted, it is possible to apply a color space of a single six-sided pyramid model or cylindrical model, in addition to the color space of twin six-sided pyramid model (Fig. 10).

In the above-described embodiments, an example is described, in which the color image input to the image processing device 12 is an RGB image, however, the present invention is not limited to this. The present invention can be applied also when the color image is a YCbCr image. In this case, after the YCbCr image is converted into an RGB image, the processing in Fig. 2 is initiated.

## Claims

1. Image processing device for distinguishing slight color differences of target objects, such as cells, included in a color image, comprising:
a processing unit that finds in a color space a hue (H) of each pixel of a target object of the color image, wherein the color space comprises color boundaries (H_{RY}, H_{YG}, H_{GC}, H_{CB}, H_{BM}, H_{MR}) and a color boundary (H_{RY}, H_{YG}, H_{GC}, H_{CB}, H_{BM}, H_{MR}) is a boundary value between two predefined hues;
a detecting unit that detects a mode value (H₃₀) in the color space from a distribution of the hues (H) of the pixels of the target object; and
a changing unit that rotates said hue (H) of each pixel of the target object in said color space so that the mode value (H₃₀) overlaps one of the color boundaries (H_{RY}, H_{YG}, H_{GC}, H_{CB}, H_{BM}, H_{MR}) such that the hues (H) have been discretized to allow visual separation of the target objects.

2. Image processing device according to claim 1, **characterized in that** said processing unit finds saturation (S) and intensity (I) of each pixel, in addition to said hue (H), and said changing unit also changes said saturation (S) and said intensity (I), in addition to the change of said hue (H) and changes the saturation (S) and the intensity (I) of each pixel of the target object in said color image so that a plurality of target pixels (31 to 34) different in said saturation becomes most distant from one another in the color space including a hue axis (H), a saturation axis (S) and an intensity axis (I).

3. Image processing device according to claim 2, **characterized by** a converting unit which finds each color component of red, green and blue (RGB) of each target pixel of said color image based on the hue (H), the saturation (S) and the intensity (I) after the change by said changing unit and converts a gradation of said each color component so that said plurality of target pixels (31 to 34) becomes most distant from one another in said color space.

4. Image processing device according to claim 1, **characterized in that** said processing unit finds saturation (S) and intensity (I) of each pixel of the target object, in addition to said hue (H), and said device further comprises a converting unit which finds each color component of red, green and blue (RGB) of each pixel of the target object in said color image based on the hue (H) after the change by said changing unit and the saturation (S) and the intensity (I) found by said processing unit and converts a gradation of said each color component so that a plurality of target pixels (31 to 34) different in said saturation becomes most distant from one another in the color space including a hue axis (H), a saturation axis (S) and an intensity axis (I).

5. Image processing device according to claim 3 or 4, **characterized in that** said converting unit converts the gradation of said each color component using a table.

6. Image processing device according to any one of claims 2 to 5, **characterized by** an extracting unit that extracts said plurality of target pixels (31 to 34) based on a user instruction.

7. Image processing device according to any one of claims 1 to 6, **characterized in that** said processing unit finds at least said hue (H) of each pixel of the target object using said color image after negative-positive reversal.

8. Image processing device according to any one of claims 1 to 7, **characterized by** a selecting unit that selects a target area with a predefined color value in said color image.

9. Image processing device according to claim 8, **characterized in that** said selecting unit selects said target area based on the user instruction.

10. Image processing device according to claim 8 or 9, **characterized by** a measuring unit that measures the number or area ratio of said target areas in said color image.

11. Image processing device according to any one of claims 1 to 10, **characterized in that** said color image is a photographed image of eosinophil.

12. Image processing program product for distinguishing slight color differences of target objects, such as cells, included in a color image causing a computer to execute:
a processing operation of finding in a color space a hue (H) of each pixel of a target object of the color image, wherein the color space comprises color boundaries (H_{RY}, H_{YG}, H_{GC}, H_{CB}, H_{BM}, H_{MR}) and a color boundary (H_{RY}, H_{YG}, H_{GC}, H_{CB}, H_{BM}, H_{MR}) is a boundary value between two predefined hues;
a detecting operation of detecting a mode value (H₃₀) in the color space from a distribution of the hues (H) of the pixels of the target object; and
a changing operation of rotating said hue (H) of each pixel of the target object in said color space so that the mode value (H₃₀) overlaps one of the color boundaries (H_{RY}, H_{YG}, H_{GC}, H_{CB}, H_{BM}, H_{MR}), such that the hues (H) have been discretized to allow visual separation of the target objects.

## Patentansprüche

1. Bildverarbeitungsvorrichtung zur Unterscheidung geringer Farbunterschiede von Zielobjekten wie Zellen als Bestandteil eines Farbbildes, umfassend eine Verarbeitungseinheit, die in einem Farbraum einen Farbton (H) jedes Pixels eines Zielobjektes jedes Farbbildes findet, wobei der Farbraum Farbgrenzen (H_{RY}, H_{YG}, H_{GC}, H_{CB}, H_{BM}, H_{MR}) aufweist und eine Farbgrenze (H_{RY}, H_{YG}, H_{GC}, H_{CB}, H_{BM}, H_{MR}) ein Grenzwert zwischen zwei vorbestimmten Farbtönen ist; ferner umfassend eine Erkennungseinheit, die einen Moduswert (H₃₀) in dem Farbraum aus einer Verteilung der Farbtöne (H) der Pixel des Zielobjektes erkennt; und schließlich umfassend eine Änderungseinheit, die den Farbton (H) jedes Pixels des Zielobjektes in dem genannten Farbraum dreht, so daß der Moduswert (H₃₀) eine der Farbgrenzen (H_{RY}, H_{YG}, H_{GC}, H_{CB}, H_{BM}, H_{MR}) überlappt derart, daß die Farbtöne unterschieden werden, um dadurch die visuelle Trennung der Zielobjekte zu ermöglichen.

2. Bildverarbeitungsvorrichtung nach Anspruch 1, **dadurch gekennzeichnet, daß** die Verarbeitungseinheit Sättigung (S) und Intensität (I) jedes Pixels findet, und zwar zusätzlich zu dem genannten Farbton (H), und daß die Änderungseinheit auch die Sättigung (S) ändert sowie die Intensität (I), und zwar zusätzlich zur Änderung des Farbtons, sowie die Sättigung (S) und die Intensität (I) jedes Pixels des Zielobjektes in dem Farbbild, so daß mehrere Zielpixel (31 - 34) mit unterschiedlicher Sättigung in dem Farbraum den größten Abstand voneinander in dem Farbraum erhalten, einschließlich einer Farbtonachse (H), einer Sättigungsachse (S) und einer Intensitätsachse (I).

3. Bildverarbeitungsvorrichtung nach Anspruch 2, **gekennzeichnet durch** eine Umwandlungseinheit, die jede Farbkomponente von Rot, Grün und Blau (RGB) jedes Zielpixels des Farbbildes findet, und zwar basierend auf dem Farbton (H), der Sättigung (S) und der Intensität (I) nach der Änderung durch die Änderungseinheit, und die eine Abstufung jeder Farbkomponenten umwandelt, so daß die Mehrzahl der Zielpixel (31 - 34) in dem genannten Farbraum den größten Abstand voneinander erhalten.

4. Bildverarbeitungsvorrichtung nach Anspruch 1, **dadurch gekennzeichnet, daß** die Verarbeitungseinheit Sättigung (S) und Intensität (I) jedes Pixels des Zielobjektes findet, und zwar zusätzlich zu dem Farbton (H), und daß die Vorrichtung ferner eine Umwandlungseinheit aufweist, die jede Farbkomponente von Rot, Grün und Blau (RGB) jedes Pixels des Zielobjektes in dem Farbbild, basierend auf dem Farbton (H), nach der Änderung durch die Änderungseinheit und die Sättigung (S) sowie die Intensität (I), festgestellt durch die Verarbeitungseinheit, findet und eine Abstufung jeder Farbkomponenten so umwandelt, daß eine Mehrzahl der Zielpixel (31 - 34), die sich in der Sättigung unterscheiden, in dem Farbraum den größten Abstand voneinander erhalten, und zwar einschließlich einer Farbtonachse (H), einer Sättigungsachse (S) und einer Intensitätsachse (I).

5. Bildverarbeitungsvorrichtung nach Anspruch 3 oder 4, **dadurch gekennzeichnet, daß** die Umwandlungseinheit die Abstufung jeder Farbkomponenten durch Verwendung einer Tabelle umwandelt.

6. Bildverarbeitungsvorrichtung nach einem der Ansprüche 2 bis 5, **gekennzeichnet durch** eine Extraktionseinheit, die die Mehrzahl der Zielpixel (31 - 34) auf der Grundlage einer Benutzeranweisung extrahiert.

7. Bildverarbeitungsvorrichtung nach einem der Ansprüche 1 bis 6, **dadurch gekennzeichnet, daß** die Verarbeitungseinheit wenigstens den genannten Farbton (H) jedes Pixels des Zielobjektes unter Verwendung des Farbbildes nach der Negativ-Positiv-Umkehrung findet.

8. Bildverarbeitungsvorrichtung nach einem der Ansprüche 1 bis 7, **gekennzeichnet durch** eine Auswahleinheit, die einen Zielbereich mit einem vorbestimmten Farbwert in dem Farbbild auswählt.

9. Bildverarbeitungsvorrichtung nach Anspruch 8, **dadurch gekennzeichnet, daß** die Auswahleinheit den Zielbereich auf der Grundlage der Benutzeranweisung auswählt.

10. Bildverarbeitungsvorrichtung nach Anspruch 8 oder 9, **gekennzeichnet durch** eine Meßeinheit, die die Zahl oder das Flächenverhältnis der Zielbereiche in dem Farbbild mißt.

11. Bildverarbeitungsvorrichtung nach einem der Ansprüche 1 bis 10, **dadurch gekennzeichnet, daß** das Farbbild ein fotografisches Bild eines Eosinophils ist.

12. Bildverarbeitungsprogrammprodukt zur Unterscheidung geringer Farbunterschiede von Zielobjekten, beispielsweise Zellen, die sich in einem Farbbild befinden, mit Hilfe eines Computers, der folgende Schritte ausführt: einen Verarbeitungsvorgang, bei dem in einem Farbraum ein Farbton (H) jedes Pixels eines Zielobjektes des Farbbildes gefunden wird, wobei der Farbraum Farbgrenzen (H_{RY}, H_{YG}, H_{GC}, H_{CB}, H_{BM}, H_{MR}) aufweist und eine Farbgrenze (H_{RY}, H_{YG}, H_{GC}, H_{CB}, H_{BM}, H_{MR}) zwischen zwei vorbestimmten Farbtönen ist; einen Erkennungsvorgang zum Feststellen eines Moduswertes (H₃₀) in dem Farbraum aus einer Verteilung der Farbtöne (H) der Pixel des Zielobjektes; und einen Änderungsvorgang des Drehens des genannten Farbtons (H) jedes Pixels des Zielobjektes in dem Farbraum, so daß der Moduswert (H₃₀) eine der Farbgrenzen (H_{RY}, H_{YG}, H_{GC}, H_{CB}, H_{BM}, H_{MR}) überlappt, und zwar derart, daß die Farbtöne unterschieden werden, um dadurch die visuelle Trennung der Zielobjekte zu ermöglichen.

## Revendications

1. Dispositif de traitement d'image pour distinguer des légères différences de couleur d'objets cibles, comme des cellules, inclus dans une image en couleurs, comprenant :
une unité de traitement qui trouve dans un espace de couleurs une nuance (H) de chaque pixel d'un objet cible de l'image en couleurs, dans lequel l'espace de couleurs comprend des frontières de couleurs (H_{RY}, H_{YG}, H_{GC}, H_{CB}, H_{BM}, H_{MR}), et une frontière de couleurs (H_{RY}, H_{YG}, H_{GC}, H_{CB}, H_{BM}, H_{MR}) est une valeur frontière entre deux nuances prédéfinies ;
une unité de détection qui détecte une valeur de mode (H₃₀) dans l'espace de couleurs à partir d'une distribution des nuances (H) des pixels de l'objet cible ; et
une unité de changement qui fait tourner ladite nuance (H) de chaque pixel de l'objet cible dans ledit espace de couleurs de telle façon que la valeur de mode (H₃₀) chevauche l'une des frontières de couleurs (H_{RY}, H_{YG}, H_{GC}, H_{CB}, H_{BM}, H_{MR}), de telle façon que les nuances (H) ont été rendues discrètes pour permettre une séparation visuelle des objets cibles.

2. Dispositif de traitement d'image selon la revendication 1, **caractérisé en ce que** ladite unité de traitement trouve la saturation (S) et l'intensité (I) de chaque pixel, en plus de ladite nuance (H), et ladite unité de changement change également ladite saturation (S) et ladite intensité (I), en plus du changement de ladite nuance (H), et change la saturation (S) et l'intensité (I) de chaque pixel de l'objet cible dans ladite image en couleurs de telle façon qu'une pluralité des pixels cibles (31 à 34) différents dans ladite saturation deviennent plus distant les uns des autres dans l'espace de couleurs incluant un axe de nuance (H), un axe de saturation (S) et un axe d'intensité (I).

3. Dispositif de traitement d'image selon la revendication 2, **caractérisé par** une unité de conversion qui trouve chaque composante de couleur de rouge, de vert et de bleu (RGB) de chaque pixel cible de ladite image en couleurs sur la base de la nuance (H), de la saturation (S) et de l'intensité (I) après le changement par ladite unité de changement et converti une gradation de chaque composante de couleur de telle façon que ladite pluralité de pixels cible (31 à 34) deviennent plus distants les uns des autres dans ledit espace de couleurs.

4. Dispositif de traitement d'images selon la revendication 1, **caractérisé en ce que** ladite unité de traitement trouve la saturation (S) et l'intensité (I) de chaque pixel de l'objet cible, en plus de ladite nuance (H), et ledit dispositif comprend en outre une unité de conversion qui trouve chaque composante de couleur de rouge, vert et bleu (RGB) de chaque pixel de l'objet cible dans ladite image en couleurs sur la base de la nuance (H) après le changement par ladite unité de changement et la saturation (S) et l'intensité (I) trouvées par ladite unité de traitement, et convertit une gradation de chacune desdites composantes de couleur de telle façon qu'une pluralité de pixels cibles (31 à 34) différents dans ladite saturation deviennent plus distants les uns des autres dans l'espace de couleurs incluant un axe de nuance (H), un axe de saturation (S) et un axe d'intensité (I).

5. Dispositif de traitement d'image selon la revendication 3 ou 4, **caractérisé en ce que** ladite unité de conversion convertit la gradation de chaque composante de couleur en utilisant un tableau.

6. Dispositif de traitement d'image selon l'une quelconque des revendications 2 à 5, **caractérisé par** une unité d'extraction qui extrait ladite pluralité de pixels cibles (31 à 34) sur la base d'une instruction d'un utilisateur.

7. Dispositif de traitement d'image selon l'une quelconque des revendications 1 à 6, **caractérisé en ce que** ladite unité de traitement trouve au moins ladite nuance (H) de chaque pixel de l'objet cible en utilisant ladite image en couleurs après inversion négatif/positif.

8. Dispositif de traitement d'image selon l'une quelconque des revendications 1 à 7, **caractérisé par** une unité de sélection qui sélectionne une zone cible avec une valeur de couleur prédéfinie dans ladite image en couleurs.

9. Dispositif de traitement d'images selon la revendication 8, **caractérisé en ce que** ladite unité de sélection sélectionne ladite zone cible sur la base de l'instruction de l'utilisateur.

10. Dispositif de traitement d'image selon la revendication 8 ou 9, **caractérisé par** une unité de mesure qui mesure le nombre ou le rapport de superficie desdites zones cibles dans ladite image en couleurs.

11. Dispositif de traitement d'image selon l'une quelconque des revendications à 10, **caractérisé en ce que** ladite image en couleurs est une image photographiée d'éosinophile.

12. Produit de programme de traitement d'image pour distinguer des légères différences de couleurs d'objets cibles, comme des cellules, inclus dans une image en couleurs, amenant un ordinateur à exécuter :
une opération de traitement consistant à trouver dans un espace de couleurs une nuance (H) de chaque pixel d'un objet cible de l'image en couleurs, dans lequel l'espace de couleurs comprend des frontières de couleurs (H_{RY}, H_{YG}, H_{GC}, H_{CB}, H_{BM}, H_{MR}), et une frontière de couleurs (H_{RY}, H_{YG}, H_{GC}, H_{CB}, H_{BM}, H_{MR}) est une valeur de frontière entre deux nuances prédéfinies ;
une opération de détection consistant à détecter une valeur de mode (H₃₀) dans l'espace de couleurs à partir d'une distribution des nuances (H) des pixels de l'objet cible ; et
une opération de changement consistant à faire tourner ladite nuance (H) de chaque pixel de l'objet cible dans ledit espace de couleurs de telle façon que la valeur de mode (H₃₀) chevauche l'une des frontières de couleurs (H_{RY}, H_{YG}, H_{GC}, H_{CB}, H_{BM}, H_{MR}), de telle façon que les nuances (H) ont été rendues discrètes pour permettre une séparation visuelle des objets cibles.
